# FASCICULE DE BREVET EUROPEEN

(11) **EP 3 318 496 B1**
(45) Date de publication et mention de la délivrance du brevet: **30.01.2019**
(21) Numéro de dépôt: 17199321.5
(22) Date de dépôt: 31.10.2017
(51) Int. Cl.: B64D 37/32, A62C 3/08

(54) **SYSTEME D'INERTAGE D'UN RESERVOIR DE CARBURANT, ET PROCEDE DE COMMANDE DU SYSTEME**
BRENNSTOFFTANK-INERTISIERUNGSSYSTEM, UND VERFAHREN ZUR STEUERUNG DES SYSTEMS
FUEL TANK INERTING SYSTEM, AND METHOD OF CONTROLLING THE SYSTEM

(30) Priorité: 08.11.2016 FR 1660790
(43) Date de publication de la demande: 09.05.2018
(73) Titulaire: Zodiac Aerotechnics, 42230 Roche La Moliere (FR)
(72) Inventeur: VANDROUX, Olivier, 38100 Grenoble (FR); MISSOU, Jérémie, 42000 Saint-Etienne (FR)
(74) Mandataire: Cabinet Laurent & Charras

(56) Documents cités:
- WO-A2-2006/020286
- US-A1- 2016 107 116
- US-B1- 8 801 831

## Description

### DOMAINE TECHNIQUE

La présente invention concerne un procédé de commande d'un système d'inertage d'un réservoir de carburant d'un aéronef, tel qu'un avion, un hélicoptère ou analogue, ainsi que deux modes de réalisation d'un système d'inertage pour la mise en oeuvre dudit procédé.

### ART ANTERIEUR

Dans le domaine de l'aéronautique, il est connu des systèmes d'inertage pour générer un gaz d'inertage, tel que de l'azote, ou tout autre gaz neutre tel que le dioxyde de carbone par exemple, et pour introduire ledit gaz d'inertage dans les réservoirs de carburant pour des raisons de sécurité afin de réduire le risque d'explosion desdits réservoirs.

Un système classique d'inertage de l'art antérieur comporte, d'une manière générale, un générateur de gaz d'inertage embarqué dit OBIGGS, selon l'acronyme anglo-saxon « On Board Inert Gas Generating Systems », alimenté en air comprimé, par exemple avec de l'air comprimé détourné d'au moins un moteur à partir d'un étage dit de pression intermédiaire et/ou d'un étage dit de haute pression en fonction d'une situation de vol. On notera que l'utilisation d'air comprimé provenant d'un moteur est avantageuse car sa pression et sa température sont relativement élevées, de sorte que l'air peut être ajusté sur une large gamme de pressions et de températures désirées. Le système OBIGGS est couplé au réservoir de carburant de l'avion, et sépare l'oxygène de l'air.

Le système OBIGGS comprend au moins un module de séparation d'air contenant, par exemple, des membranes perméables, telles que des membranes en polymère, traversées par un flux d'air. En raison des différentes perméabilités de la membrane à l'azote et à l'oxygène, le système divise le flux d'air de telle sorte qu'un flux d'air à forte teneur en azote et un flux d'air à forte teneur en oxygène, sont obtenus. La fraction d'air enrichie en azote, considérée comme le gaz d'inertage, est acheminée dans les réservoirs de carburant de telle sorte que le taux d'oxygène présent dans le volume libre du réservoir est diminué. Les dispositifs nécessaires à cette opération, tels que des compresseurs, des filtres, des modules de refroidissement à air ou à eaux, et analogues, sont intégrés dans l'installation de gaz d'inertage.

Lorsque le taux d'oxygène présent dans la partie vide du réservoir est inférieur à la limite d'inflammation définie conformément aux exigences de la FAA selon l'acronyme anglo-saxon « Federal Aviation Administration » détaillées dans le document AC25.981-2A en date du 19 septembre 2008 et intitulé « FUEL TANK FLAMMABILITY REDUCTION MEANS » et ses annexes, ou conformément aux exigences de l'EASA selon l'acronyme anglo-saxon « European Aviation Safety Agency », détaillées dans le document AMC25.981, les risques d'inflammation et de déflagration sont très limités, voire nuls. De ce qui précède, rendre inerte un réservoir de carburant consiste à injecter du gaz d'inertage dans le réservoir pour maintenir le taux d'oxygène présent dans ledit réservoir sous un certain seuil, par exemple 12%.

Il est connu un système d'inertage réalisé suivant des règles de dimensionnement dictées, par exemple, par le document AC25.981-2A ou le document AMC25.981. Le débit de gaz d'inertage à injecter est ainsi déterminé, à intervalles réguliers, en fonction de valeurs de paramètres d'un profil de mission type certifié. Le profil de mission type certifié correspond au profil de mission réalisé le plus fréquemment par l'aéronef. Ces paramètres peuvent être constitués, par exemple, par un volume libre du réservoir de carburant, et/ou bien par le taux de descente et/ou de montée et/ou l'altitude de l'aéronef. Le profil de mission type certifié préconise, pour des valeurs de paramètres à un instant donné, l'injection d'un certain débit de gaz d'inertage comprenant une certaine concentration d'oxygène pour satisfaire à la réglementation en vigueur.

Il est également connu un système d'inertage conçu pour injecter dans au moins un réservoir de carburant du gaz d'inertage avec un débit adapté à un besoin déterminé en temps réel pendant le vol de l'aéronef. Ce type de système d'inertage ne se base pas sur un profil de mission type certifié imposé par l'autorité de certification américaine qui est souvent plus contraignant que la mission réelle effectuée par l'aéronef, et qui consomme donc plus d'air. L'injection de gaz d'inertage répond à une stratégie d'inertage optimisée, basée par exemple sur une estimation du débit d'air entrant dans le réservoir en fonction de sa mise à l'air, et du volume réel de carburant consommé.

Ce type de système d'inertage connu, adapté au besoin réel en débit de gaz d'inertage, implémente une fonction de régulation de débit de gaz d'inertage, en aval du module de séparation d'air. Cette fonction de régulation de débit met en oeuvre un une vanne de contrôle de débit, un ensemble de capteurs ou un débitmètre, et un calculateur contenant une loi de régulation de débit de type boucle fermée. La consigne de régulation de débit de gaz inerte est déterminée à partir de données relatives à l'aéronef, telles que la variation de la pression atmosphérique extérieure et/ou le taux variation de l'altitude de l'aéronef et/ou le volume de carburant présent dans le réservoir et/ou la masse de carburant consommé par les moteurs.

Ainsi, en optimisant, et notamment en diminuant le débit de gaz d'inertage injecté dans le réservoir de carburant, la quantité d'air consommée par le module de séparation d'air diminue, ce qui permet de réduire les coûts de fonctionnement du système d'inertage.

Cependant, à pression et température constantes de l'air entrant dans le module de séparation d'air, et à pression atmosphérique constante, le fait de diminuer le débit de gaz d'inertage impacte sur sa pureté. En effet, si le débit de gaz d'inertage diminue, la pureté du gaz est améliorée, c'est-à-dire sa concentration d'oxygène diminue.

Il s'ensuit que ce type de système d'inertage est surdimensionné par rapport au besoin réel en pureté de gaz d'inertage, et génère et injecte un gaz d'inertage comprenant une qualité plus importante que nécessaire, entrainant indirectement une surconsommation de carburant pour l'aéronef, et des coûts de fonctionnement élevés.

Le document US 8,801,831 B1 décrit un procédé et un appareil de contrôle de la génération de gaz inerte, dans lesquels un système de contrôle du flux d'air est configuré pour contrôler le flux d'air dans un module de séparation d'air.

### EXPOSE DE L'INVENTION

L'un des buts de l'invention est donc de remédier à ces inconvénients en proposant un procédé de commande d'un système d'inertage d'un réservoir de carburant d'un aéronef, permettant d'adapter la distribution de gaz d'inertage afin de réduire indirectement la consommation de carburant, et les coûts liés au fonctionnement du système d'inertage.

A cet effet, il est proposé un procédé de commande d'un système d'inertage comprenant au moins un module de séparation d'air alimenté en entrée avec de l'air sous une certaine pression, pour générer en sortie un gaz d'inertage à injecter dans le réservoir comprenant un certain débit et une certaine concentration d'oxygène.

Selon l'invention, le procédé comprend, à un instant donné et à température d'air et pression atmosphérique constantes :
- une opération de diminution du débit de gaz d'inertage jusqu'à une valeur déterminée ;
- une opération de diminution de la pression d'air à l'entrée du module de séparation d'air pour provoquer une augmentation de la concentration d'oxygène depuis une valeur initiale jusqu'à une valeur déterminée.

Selon des caractéristiques essentielles de l'invention :
- l'opération de diminution du débit de gaz d'inertage est réalisée en compensant une perte de débit de gaz d'inertage provoquée par l'opération de diminution de la pression d'air ;
- l'opération de diminution de la pression d'air est réalisée en compensant une diminution de la concentration d'oxygène provoquée par l'opération de diminution du débit de gaz d'inertage.

Lorsque le débit de gaz d'inertage est optimisé, c'est-à-dire diminué, il s'ensuit que la pureté du gaz d'inertage est augmentée involontairement, c'est-à-dire sa concentration d'oxygène est diminuée, ce qui peut être une contrainte pour la stratégie d'inertage initialement prévue si celle-ci consiste par exemple uniquement à diminuer le débit de gaz d'inertage.

De cette manière, le procédé de commande selon l'invention permet de palier à cet inconvénient et d'injecter un gaz d'inertage en dissociant le débit et la concentration d'oxygène l'un de l'autre, qui sont intimement liés. En effet, l'invention permet d'ajuster le débit et/ou la concentration d'oxygène dans le gaz d'inertage, indépendamment l'un de l'autre.

Cette caractéristique permet notamment, lorsque le débit de gaz d'inertage est diminué, de pouvoir contrer l'augmentation de la pureté du gaz d'inertage en diminuant la pression d'air pour augmenter la concentration d'oxygène dans le gaz d'inertage. Ceci permet d'éviter au système de produire un gaz d'inertage avec une qualité plus importante que nécessaire, c'est-à-dire d'éviter de faire de la sur-qualité. Cette opération est effectuée en diminuant la pression d'air à l'entrée du module de séparation d'air, ce qui permet au système d'inertage de consommer moins d'air et donc de réduire indirectement la consommation de carburant et les coûts de fonctionnement du système d'inertage.

Ainsi, l'invention permet d'ajuster la concentration d'oxygène à une valeur déterminée, qui peut, par exemple, être déterminée en fonction d'un besoin réel en concentration d'oxygène déterminé à l'instant donné, ou bien permet par exemple de conserver une concentration d'oxygène dite initiale, correspondant à la concentration d'oxygène que présentait le gaz d'inertage avant l'opération de diminution du débit, et ce en diminuant la pression de l'air à l'entrée du module de séparation d'air.

Cependant, comme évoqué, cette diminution de pression provoque une perte de débit de gaz d'inertage en sortie du module de séparation d'air. L'invention permet alors de compenser cette perte de débit de gaz d'inertage, en anticipant lors de l'opération de diminution du débit de gaz d'inertage jusqu'à la valeur déterminée. En d'autres termes, le débit sera diminué de manière moins importante pour anticiper la perte de débit qui viendra s'y ajouter, de sorte à atteindre la valeur seuil déterminée. La valeur du débit de gaz d'inertage est, par exemple, déterminée en fonction d'un besoin réel en débit de gaz d'inertage déterminé à l'instant donné.

Le principe de l'invention consiste donc à contrôler la pureté du gaz d'inertage, à débit d'inertage constant, afin de répondre au besoin d'une stratégie d'inertage pour l'optimisation du coût de fonctionnement du système d'inertage.

L'invention concerne également deux modes de réalisation d'un système d'inertage pour la mise en oeuvre du procédé précité.

Chaque système d'inertage est destiné à injecter du gaz d'inertage dans au moins un réservoir de carburant d'un aéronef pendant le vol de l'aéronef, et comprend au moins un module de séparation d'air alimenté en entrée avec de l'air sous une certaine pression, pour générer en sortie un gaz d'inertage à injecter dans le réservoir comprenant un certain débit et une certaine concentration d'oxygène.

Selon un premier mode de réalisation de l'invention, le système d'inertage comprend un contrôleur auquel sont connectés :
- une vanne motorisée de régulation du débit de gaz d'inertage disposée à la sortie du module de séparation d'air ;
- une vanne motorisée de régulation de la pression de l'air disposée à l'entrée du module de séparation d'air ;
- un capteur d'oxygène disposé à la sortie du module de séparation d'air ;
- un débitmètre disposé à la sortie du module de séparation d'air.

Et, le contrôleur comprend un programme d'ordinateur comprenant des instructions de code de programme, lisibles et exécutables par ledit contrôleur, pour envoyer, un instant donné et à température d'air et pression atmosphérique constantes :
- une commande de diminution de débit à la vanne motorisée de régulation du débit de gaz d'inertage, en fonction du débit de gaz d'inertage déterminé par le débitmètre, pour provoquer une diminution du débit de gaz d'inertage jusqu'à une valeur déterminée ;
- une commande de diminution de pression à la vanne motorisée de régulation de la pression d'air, en fonction de la concentration d'oxygène déterminée par le capteur d'oxygène, pour provoquer une augmentation de la concentration d'oxygène depuis une valeur initiale jusqu'à une valeur déterminée.

La commande de diminution du débit de gaz d'inertage est définie pour compenser une perte de débit de gaz d'inertage provoquée par la diminution de la pression d'air. La commande de diminution de la pression d'air est définie pour compenser une diminution de la concentration d'oxygène provoquée par la diminution du débit de gaz d'inertage.

Selon un deuxième mode de réalisation de l'invention, le système d'inertage comprend un contrôleur auquel sont connectés :
- une vanne motorisée de régulation du débit de gaz d'inertage disposée à la sortie du module de séparation d'air ;
- une vanne motorisée de régulation de la pression de l'air disposée à l'entrée du module de séparation d'air ;
- un capteur de pression de l'air disposé à l'entrée du module de séparation d'air ;
- un capteur de température de l'air disposé à l'entrée du module de séparation d'air ;
- un débitmètre disposé à la sortie du module de séparation d'air ;
- un capteur de pression atmosphérique.

Et, le contrôleur comprend un programme d'ordinateur comprenant des instructions de code de programme, lisibles et exécutables par ledit contrôleur, pour envoyer, à un instant donné et à température d'air et pression atmosphérique constantes :
- une commande de diminution de débit à la vanne motorisée de régulation du débit de gaz d'inertage, en fonction du débit de gaz d'inertage déterminé par le débitmètre, pour provoquer une diminution du débit de gaz d'inertage jusqu'à une valeur déterminée ;
- une commande de diminution de pression à la vanne motorisée de régulation de la pression d'air, en fonction de la valeur de la pression de l'air déterminée par le capteur de pression et d'une consigne de régulation de pression pour provoquer une augmentation de la concentration d'oxygène depuis une valeur initiale jusqu'à une valeur déterminée, la consigne de régulation de pression étant obtenue à partir d'un logiciel de conversion intégré dans le contrôleur et adapté pour convertir une consigne de régulation de la concentration d'oxygène en consigne de régulation de la pression, en fonction de la valeur du débit de gaz d'inertage donnée par le débitmètre, de la température du gaz d'inertage donnée par le capteur de température, de la pression atmosphérique environnante donnée par le capteur de pression atmosphérique, et des caractéristiques techniques et de performance du module de séparation d'air intégrées dans le contrôleur.

La commande de diminution du débit de gaz d'inertage est définie pour compenser une perte de débit de gaz d'inertage provoquée par la diminution de la pression d'air. La commande de diminution de la pression d'air est définie pour compenser une diminution de la concentration d'oxygène provoquée par la diminution du débit de gaz d'inertage.

De préférence, la commande de diminution de la pression d'air est définie de sorte que la concentration d'oxygène dans le gaz d'inertage atteint une valeur déterminée correspondant à la valeur initiale de concentration d'oxygène dans le gaz d'inertage avant l'opération de diminution du débit de gaz d'inertage.

### DESCRIPTION SOMMAIRE DES FIGURES

D'autres avantages et caractéristiques ressortiront mieux de la description qui va suivre, donnée à titre d'exemple non limitatif, du procédé de commande d'un système d'inertage d'un réservoir de carburant d'un aéronef selon l'invention, à partir des figures annexées, dans lesquelles :
- la figure 1 illustre de manière schématique un premier mode de réalisation d'un système d'inertage selon l'invention, notamment dans l'agencement du contrôleur, du module de séparation d'air et des différentes vannes et capteurs ;
- la figure 2 est une illustration schématique similaire à celle de la figure 1, illustrant un deuxième mode de réalisation du système d'inertage selon l'invention.

### DESCRIPTION DETAILLEE DE L'INVENTION

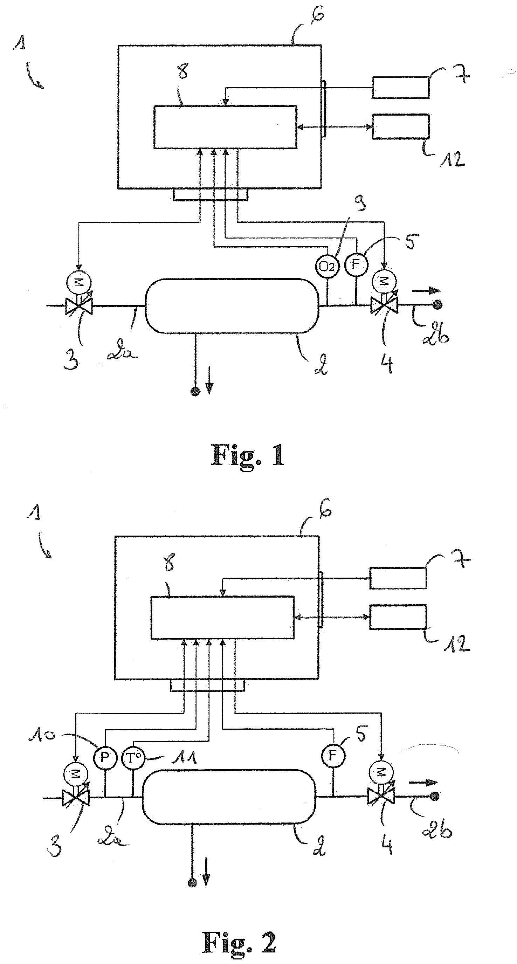

En référence aux figures 1 et 2, il est représenté un système d'inertage (1) destiné à injecter un débit de gaz d'inertage dans au moins un réservoir de carburant d'un aéronef pendant le vol de l'aéronef.

Le système d'inertage (1) comprend au moins un module de séparation d'air (2) alimenté en entrée (2a) avec de l'air sous une pression donnée, pour générer en sortie (2b) un gaz d'inertage, appauvri en oxygène, à injecter dans le réservoir avec un certain débit et une certaine concentration d'oxygène.

Le système d'inertage (1) comprend une vanne motorisée (3) de régulation de la pression de l'air, disposée à l'entrée (2a) du module de séparation d'air (2), et une vanne motorisée (4) de régulation du débit de gaz d'inertage et un débitmètre (5) disposés en sortie (2b) du module de séparation d'air (2). La vanne motorisée (4) de régulation du débit, le débitmètre (5), et la vanne motorisée (3) de régulation de la pression sont connectés à un contrôleur électronique (6) alimenté par une alimentation électrique (7).

Le contrôleur électronique (6) intègre un logiciel (8) pour la gestion des différents éléments du système d'inertage (1) tel qu'il sera décrit plus bas, et implémente une loi de régulation pour diminuer le débit de gaz d'inertage jusqu'à une valeur déterminée, et pour diminuer la pression d'air à l'entrée (2a) du module de séparation d'air (2) pour provoquer une augmentation de la concentration d'oxygène depuis une valeur initiale jusqu'à une valeur déterminée.

Plus précisément, l'opération de diminution du débit de gaz d'inertage est réalisée en compensant une perte de débit de gaz d'inertage provoquée par l'opération de diminution de la pression d'air, et l'opération de diminution de la pression d'air est réalisée en compensant une diminution de la concentration d'oxygène provoquée par l'opération de diminution du débit de gaz d'inertage.

En pratique, le logiciel (8) envoi une commande de diminution de débit à la vanne motorisée (4) de régulation du débit de gaz d'inertage, en fonction du débit de gaz d'inertage déterminé par le débitmètre (5), pour provoquer une diminution du débit de gaz d'inertage jusqu'à une valeur déterminée qui correspond, en fonction de la stratégie d'inertage mise en oeuvre, à une valeur de débit déterminée en fonction d'un besoin réel en débit de gaz d'inertage à un instant donné.

Selon un premier mode de réalisation illustré à la figure 1, le système d'inertage (1) fonctionne en boucle fermée sur la valeur de la concentration d'oxygène et comprend un capteur d'oxygène (9) disposé à la sortie (2b) du module de séparation d'air (2) et connecté au contrôleur (6) pour déterminer la concentration d'oxygène présent dans le gaz d'inertage.

Selon ce premier mode de réalisation, le logiciel (8) envoi également une commande de diminution de pression à la vanne motorisée (3) de régulation de la pression de l'air, en fonction de la concentration d'oxygène déterminée par le capteur d'oxygène (9), pour provoquer une augmentation de la concentration d'oxygène depuis une valeur initiale jusqu'à une valeur déterminée.

Selon un deuxième mode de réalisation de l'invention, illustré à la figure 2, le système d'inertage (1) fonctionne en boucle fermée sur la valeur de la pression de l'air et en boucle ouverte sur la valeur de la concentration d'oxygène, et comprend un capteur de pression d'air (10) et un capteur de température (11) disposés à l'entrée (2a) du module de séparation d'air (2) et connectés au contrôleur (6).

Selon ce deuxième mode de réalisation, le logiciel (8) envoi une commande de diminution de pression à la vanne motorisée (3) de régulation de la pression de l'air, en fonction de la valeur de la pression de l'air déterminée par le capteur de pression d'air (10) et d'une consigne de régulation de pression pour provoquer une augmentation de la concentration d'oxygène depuis une valeur initiale jusqu'à la valeur déterminée. La consigne de régulation de pression est obtenue à partir d'une table de conversion intégrée dans le logiciel (8) du contrôleur (6). La table de conversion est notamment adaptée pour convertir une consigne de régulation de la concentration d'oxygène en consigne de régulation de la pression. Cette conversion est effectuée en fonction de la valeur du débit de gaz d'inertage donnée par le débitmètre (5), de la température du gaz d'inertage donnée par le capteur de température (11), de la pression atmosphérique environnante donnée par le capteur de pression atmosphérique ou bien récupérée directement par l'intermédiaire des données (12) issues de l'aéronef, et des caractéristiques techniques et de performance du module de séparation d'air (2) intégrées dans le logiciel (8).

Dans les deux modes de réalisation, la commande de diminution du débit est définie pour compenser une perte de débit de gaz d'inertage provoquée par la diminution de la pression d'air, et la commande de diminution de la pression d'air est définie pour compenser une diminution de la concentration d'oxygène provoquée par la diminution du débit de gaz d'inertage.

Les lois de régulation de débit de gaz d'inertage et de pression d'air sont combinées et convergent de sorte que la pression d'air et le débit de gaz d'inertage s'ajustent aux valeurs déterminées par la stratégie d'inertage.

En fonction de la stratégie d'inertage choisie, la concentration d'oxygène dans le gaz d'inertage peut être ajustée, indépendamment de la valeur du débit de gaz d'inertage, à une valeur déterminée, par exemple en fonction d'un besoin réel en concentration d'oxygène déterminé à un instant donné, ou bien la concentration d'oxygène est augmentée au fur et à mesure de la diminution du débit de gaz d'inertage pour être maintenue constante à une valeur initiale.

De manière connue, le gaz d'inertage est ensuite acheminé vers des moyens de distribution du gaz d'inertage, telles que des conduites de distribution, des valves, et des buses d'injection, pour l'injection en tant que tel dans le ou les réservoirs de carburant de l'aéronef pour des raisons de sécurité afin de réduire le risque d'explosion desdits réservoirs. Le gaz d'inertage injecté permet de réduire le taux d'oxygène présent dans le ou lesdits réservoirs, et notamment de maintenir ce taux sous un certain seuil, par exemple inférieur à 12%.

Il ressort de ce qui précède que la présente invention permet de réduire considérablement le débit d'air consommé par le module de séparation d'air (2) en s'affranchissant de la contrainte de dépendance entre le débit de gaz d'inertage et la pureté du gaz d'inertage inhérente à l'utilisation du module de séparation d'air (2). La présente invention permet ainsi de réduire indirectement la consommation de carburant, de diminuer l'empreinte écologique de l'aéronef et les coûts liés au fonctionnement du système d'inertage (1).

Diminuer la consommation d'air entrant permet aussi de diminuer l'usure des filtres et des membranes mis en oeuvre dans le système d'inertage (1), et donc d'augmenter leur durée de vie. Les fréquences de maintenance sont donc allongées, diminuant le coût de possession du système d'inertage (1).

## Revendications

1. Procédé de commande d'un système d'inertage (1) d'au moins un réservoir de carburant d'un aéronef, le système d'inertage (1) comprenant au moins un module de séparation d'air (2) alimenté en entrée (2a) avec de l'air sous une certaine pression, pour générer en sortie (2b) un gaz d'inertage à injecter dans le réservoir comprenant un certain débit et une certaine concentration d'oxygène, le procédé étant ***caractérisé* en ce qu'**il comprend, à un instant donné et à température d'air et pression atmosphérique constantes :
- une opération de diminution du débit de gaz d'inertage jusqu'à une valeur déterminée ;
- une opération de diminution de la pression d'air pour provoquer une augmentation de la concentration d'oxygène depuis une valeur initiale jusqu'à une valeur déterminée ;
***et en ce que***
- l'opération de diminution du débit de gaz d'inertage est réalisée en compensant une perte de débit de gaz d'inertage provoquée par l'opération de diminution de la pression d'air ;
- l'opération de diminution de la pression d'air est réalisée en compensant une diminution de la concentration d'oxygène provoquée par l'opération de diminution du débit de gaz d'inertage.

2. Procédé selon la revendication 1, ***caractérisé* en ce que** la valeur déterminée de débit de gaz d'inertage correspond à une valeur déterminée en fonction d'un besoin réel en débit de gaz d'inertage à l'instant donné.

3. Procédé selon la revendication 1, ***caractérisé* en ce que** la valeur déterminée de concentration d'oxygène correspond à une valeur déterminée en fonction d'un besoin réel en concentration d'oxygène à l'instant donné.

4. Procédé selon la revendication 1, ***caractérisé* en ce que** la valeur déterminée de concentration d'oxygène correspond à la valeur initiale de concentration d'oxygène avant l'opération de diminution du débit de gaz d'inertage.

5. Système d'inertage (1) destiné à injecter du gaz d'inertage dans au moins un réservoir de carburant d'un aéronef pendant le vol de l'aéronef, ledit système comprend au moins un module de séparation d'air (2) alimenté en entrée (2a) avec de l'air sous une certaine pression, pour générer en sortie (2b) un gaz d'inertage à injecter dans le réservoir comprenant un certain débit et une certaine concentration d'oxygène, le système d'inertage (1) étant ***caractérisé* en ce qu'**il comprend un contrôleur (6) auquel sont connectés :
- une vanne motorisée (4) de régulation du débit de gaz d'inertage disposée à la sortie (2b) du module de séparation d'air (2) ;
- une vanne motorisée (3) de régulation de la pression de l'air disposée à l'entrée (2a) du module de séparation d'air (2) ;
- un capteur d'oxygène (9) disposé à la sortie (2b) du module de séparation d'air (2) ;
- un débitmètre (5) disposé à la sortie (2b) du module de séparation d'air (2) ;
***en ce que*** le contrôleur (6) comprend un programme d'ordinateur comprenant des instructions de code de programme, lisibles et exécutables par ledit contrôleur (6), pour envoyer, à un instant donné et à température d'air et pression atmosphérique constantes :
- une commande de diminution de débit à la vanne motorisée (4) de régulation du débit de gaz d'inertage, en fonction du débit de gaz d'inertage déterminé par le débitmètre (5), pour provoquer une diminution du débit de gaz d'inertage jusqu'à une valeur déterminée ;
- une commande de diminution de pression à la vanne motorisée de régulation de la pression d'air, en fonction de la concentration d'oxygène déterminée par le capteur d'oxygène (9), pour provoquer une augmentation de la concentration d'oxygène depuis une valeur initiale jusqu'à une valeur déterminée ;
***et en ce que***
- la commande de diminution du débit est définie pour compenser une perte de débit de gaz d'inertage provoquée par la diminution de la pression d'air ;
- la commande de diminution de la pression d'air est définie pour compenser une diminution de la concentration d'oxygène provoquée par la diminution du débit de gaz d'inertage.

6. Système d'inertage (1) destiné à injecter du gaz d'inertage dans au moins un réservoir de carburant d'un aéronef pendant le vol de l'aéronef, ledit système comprend au moins un module de séparation d'air (2) alimenté en entrée (2a) avec de l'air sous une certaine pression, pour générer en sortie (2b) un gaz d'inertage à injecter dans le réservoir comprenant un certain débit et une certaine concentration d'oxygène, le système d'inertage (1) étant ***caractérisé* en ce qu'**il comprend un contrôleur (6) auquel sont connectés :
- une vanne motorisée (4) de régulation du débit de gaz d'inertage disposée à la sortie (2b) du module de séparation d'air (2) ;
- une vanne motorisée (3) de régulation de la pression de l'air disposée à l'entrée (2a) du module de séparation d'air (2) ;
- un capteur de pression de l'air disposé à l'entrée (2a) du module de séparation d'air (2) ;
- un capteur de température (11) de l'air disposé à l'entrée (2a) du module de séparation d'air (2) ;
- un débitmètre (5) disposé à la sortie (2b) du module de séparation d'air (2) ;
- un capteur de pression atmosphérique ;
***en ce que*** le contrôleur (6) comprend un programme d'ordinateur comprenant des instructions de code de programme, lisibles et exécutables par ledit contrôleur (6), pour envoyer, à un instant donné et à température d'air et pression atmosphérique constantes :
- une commande de diminution de débit à la vanne motorisée (4) de régulation du débit de gaz d'inertage, en fonction du débit de gaz d'inertage déterminé par le débitmètre (5), pour provoquer une diminution du débit de gaz d'inertage jusqu'à une valeur déterminée ;
- une commande de diminution de pression à la vanne motorisée de régulation de la pression d'air, en fonction de la valeur de la pression de l'air déterminée par le capteur de pression et d'une consigne de régulation de pression pour provoquer une augmentation de la concentration d'oxygène depuis une valeur initiale jusqu'à une valeur déterminée, la consigne de régulation de pression étant obtenue à partir d'un logiciel de conversion intégré dans le contrôleur et adapté pour convertir une consigne de régulation de la concentration d'oxygène en consigne de régulation de la pression, en fonction de la valeur du débit de gaz d'inertage donnée par le débitmètre (5), de la température du gaz d'inertage donnée par le capteur de température (11), de la pression atmosphérique environnante donnée par le capteur de pression atmosphérique, et des caractéristiques techniques et de performance du module de séparation d'air (2) intégrées dans le contrôleur (6) ;
***et en ce que***
- la commande de diminution du débit est définie pour compenser une perte de débit de gaz d'inertage provoquée par la diminution de la pression d'air ;
- la commande de diminution de la pression d'air est définie pour compenser une diminution de la concentration d'oxygène provoquée par la diminution du débit de gaz d'inertage.

7. Système d'inertage (1) selon l'une quelconque des revendications 5 ou 6, ***caractérisé* en ce que** la commande de diminution de la pression d'air est définie de sorte que la concentration d'oxygène atteint une valeur déterminée correspondant à la valeur initiale de concentration d'oxygène avant l'opération de diminution du débit de gaz d'inertage.

## Patentansprüche

1. Verfahren zur Steuerung eines Inertisierungssystems (1) in mindestens einem Flugzeugbrennstofftank, wobei das Inertisierungssystem (1) mindestens ein Luftabscheidermodul (2) aufweist, das am Eingang (2a) mit Luft unter einem gewissen Druck versorgt wird, um am Ausgang (2b) ein Inertgas zu erzeugen, das mit einem gewissen Durchsatz und einer gewissen Sauerstoffkonzentration in den Kraftstofftank eingeblasen wird, wobei das Verfahren **dadurch gekennzeichnet ist, dass** es zu einem bestimmten Zeitpunkt und bei konstanter Lufttemperatur und konstantem Atmosphärendruck umfasst:
- einen Vorgang der Verringerung des Inertgas-Durchsatzes bis auf einen vorher festgelegten Wert;
- einen Vorgang der Verringerung des Luftdrucks, um eine Erhöhung der Sauerstoffkonzentration von einem Ausgangswert bis zu einem festgelegten Wert zu erreichen;
und dadurch, dass
- der Vorgang der Verringerung des Inertgas-Durchsatzes durch Ausgleich eines Verlustes des Inertgasdurchsatzes ausgeführt wird, der durch den Vorgang der Verringerung des Luftdrucks verursacht wird,
- der Vorgang der Verringerung des Luftdrucks durch Ausgleich einer Verringerung der Sauerstoffkonzentration ausgeführt wird, die durch den Vorgang der Verringerung des Inertgas-Durchsatzes verursacht wird.

2. Verfahren nach Anspruch 1, **dadurch gekennzeichnet, dass** der festgelegte Wert des Inertgas-Durchsatzes einem Wert entspricht, der entsprechend einem konkreten Bedarf an Inertgas zu einem gegebenen Zeitpunkt bestimmt wird.

3. Verfahren nach Anspruch 1, **dadurch gekennzeichnet, dass** der festgelegte Wert der Sauerstoffkonzentration einem Wert entspricht, der entsprechend einem konkreten Bedarf an Sauerstoffkonzentration zu einem gegebenen Zeitpunkt bestimmt wird.

4. Verfahren nach Anspruch 1, **dadurch gekennzeichnet, dass** der festgelegte Wert der Sauerstoffkonzentration dem ursprünglichen Wert der Sauerstoffkonzentration vor dem Vorgang der Verringerung des Inertgas-Durchsatzes entspricht.

5. Inertisierungssystem (1) zum Einblasen von Inertgas in mindestens einen Brennstofftank eines Flugzeugs während des Fluges des Flugzeugs, wobei dieses System mindestens ein Luftabscheidermodul (2) aufweist, das am Eingang (2a) mit Luft unter einem gewissen Druck versorgt wird, um am Ausgang (2b) ein Inertgas zu erzeugen, das mit einem gewissen Durchsatz und einer gewissen Sauerstoffkonzentration in den Kraftstofftank eingeblasen wird, wobei das Inertisierungssystems(1) **dadurch gekennzeichnet ist, dass** es eine Kontrollvorrichtung (6) umfasst, mit der:
- ein Motorventil (4) zur Regelung des Inertgas-Durchsatzes, das am Ausgang (2b) des Luftabscheidermoduls (2) angeordnet ist;
- ein Motorventil zur Regelung des Luftdrucks, das am Ausgang (2a) des Luftabscheidermoduls (2) angeordnet ist;
- ein Sauerstofffühler (9), der am Ausgang (2b) des Luftabscheidermoduls (2) angeordnet ist,
- ein Durchflussmesser (5), der am Ausgang (2b) des Luftabscheidermoduls (2) angeordnet ist,
verbunden sind,
dadurch, dass die Kontrollvorrichtung (6) ein Computerprogramm enthält, das Programmcodeanweisungen enthält, die für diese Kontrollvorrichtung (6) lesbar und ausführbar sind, um zu einem bestimmten Zeitpunkt und bei konstanter Lufttemperatur und konstantem Atmosphärendruck zu senden:
- einen Befehl zur Verringerung des Durchsatzes an das Motorventil (4) zur Regelung des Inertgas-Durchsatzes, entsprechend dem Inertgas-Durchsatz, der vom Durchflussmesser (5) bestimmt wird, um eine Verringerung des Inertgas-Durchsatzes bis zu einem vorher festgelegten Wert zu verursachen;
- eine Steuerung zur Minderung des Drucks am Motorventil zur Steuerung des Luftdrucks, entsprechend der Sauerstoffkonzentration, die vom Sauerstofffühler (9) bestimmt wird, um eine Erhöhung der Sauerstoffkonzentration von einem Ausgangswert bis zu einem festgelegten Wert zu verursachen;
und dadurch, dass
- die Steuerung zur Durchsatzverringerung definiert ist, um einen Verlust des Inertgas-Durchsatzes, der durch die Verringerung des Luftdrucks verursacht wird, auszugleichen;
- die Steuerung zur Luftdruckverminderung ist definiert, um eine Verminderung der Sauerstoffkonzentration, der durch die Verminderung des Inertgas-Durchsatzes verursacht wird, auszugleichen.

6. Inertisierungssystem (1), zum Einblasen von Inertgas in mindestens einen Brennstofftanks eines Flugzeugs während des Fluges des Flugzeugs, wobei dieses System mindestens ein Luftabscheidermodul (2) aufweist, das am Eingang (2a) mit Luft unter einem gewissen Druck versorgt wird, um am Ausgang (2b) ein Inertgas zu erzeugen, das mit einem gewissen Durchsatz und einer gewissen Sauerstoffkonzentration in den Kraftstofftank eingeblasen wird, wobei das Inertisierungssystem (1) **dadurch gekennzeichnet ist, dass** es eine Kontrollvorrichtung (6) umfasst, mit der:
- ein Motorventil (4) zur Regelung des Inertgas-Durchsatzes, das am Ausgang (2b) des Luftabscheidermoduls (2) angeordnet ist;
- ein Motorventil (3) zur Regelung des am Ausgang (2a) des Luftabscheidermoduls (2) bereitgestellten Luftdrucks;
- ein Luftdruckfühler, der am Eingang (2a) des Luftabscheidermoduls (2) angeordnet ist;
- ein Luftttemperaturfühler (11), der am Eingang (2a) des Luftabscheidermoduls (2) angeordnet ist;
- ein Durchflussmesser (5), der am Ausgang (2b) des Luftabscheidermoduls (2) angeordnet ist;
- ein atmosphärischer Luftdruckfühler
verbunden sind,
dadurch, dass die Kontrollvorrichtung (6) ein Computerprogramm enthält, das Programmcodeanweisungen enthält, die für diese Kontrollvorrichtung (6) lesbar und ausführbar sind, um zu einem bestimmten Zeitpunkt und bei konstanter Lufttemperatur und konstantem Atmosphärendruck das Folgende zu senden:
- eine Steuerung zur Verringerung des Durchsatzes an das Motorventil zur Regelung des Inertgas-Durchsatzes, entsprechend dem Inertgas-Durchsatz, der vom Durchflussmesser (5) bestimmt wird, um eine Verringerung des Inertgas-Durchsatzes bis zu einem vorher festgelegten Wert zu verursachen;
- eine Steuerung zur Minderung des Drucks am Motorventil (4) zur Steuerung des Luftdrucks, entsprechend des Luftdruckwertes, der vom Druckluftfühler bestimmt wird, und eines Sollwertes zur Druckregelung, um eine Erhöhung der Sauerstoffkonzentration von einem Ausgangswert bis zu einem festgelegten Wert zu erreichen, wobei der Sollwert zur Druckregelung sich über ein Umrechnungsprogramm berechnet, das in der Kontrollvorrichtung integriert ist und in der Lage ist, einen Sollwert zur Regelung der Sauerstoffkonzentration in Sollwert zur Druckregelung in Abhängigkeit vom Wert des Inertgas-Durchsatzes, der vom Durchflussmesser (5) stammt, der Temperatur des Inertgases, der vom Temperaturfühler (11) stammt, des herrschenden atmosphärischen Drucks, der vom atmosphärischen Luftdruckfühler stammt sowie der technischen Eigenschaften und Leistungsdaten des in der Kontrollvorrichtung (6) integrierten Luftabscheidermoduls (2) umzurechnen
und dadurch, dass
- die Steuerung zur Durchsatzverringerung definiert ist, um einen Verlust des Inertgas-Durchsatzes, der durch die Verringerung des Luftdrucks verursacht wird, auszugleichen;
- die Steuerung zur Luftdruckverminderung definiert ist, um eine Verminderung der Sauerstoffkonzentration, die durch die Verminderung des Inertgas-Durchsatzes verursacht wird, auszugleichen.

7. Inertisierungssystem (1) gemäß einem der Ansprüche 5 oder 6, **dadurch gekennzeichnet, dass** die Steuerung zur Verringerung des Luftdrucks so definiert ist, dass die Sauerstoffkonzentration einen bestimmten Wert erreicht, der dem ursprünglichen Sauerstoffkonzentrationswert vor dem Vorgang der Verringerung des Inertgas-Durchsatzes entspricht.

## Claims

1. Method for controlling an inerting system (1) of at least one fuel tank of an aircraft, the inerting system (1) comprising at least one air separation module (2) supplied at the inlet (2a) with air at a certain pressure in order to generate at the outlet (2b) an inert gas to be injected into the fuel tank comprising a certain flow rate and a certain oxygen concentration, the process being ***characterized* in that** it comprises, at a given instant and at constant temperature and atmospheric pressure:
- an operation whereby the inert gas flow rate is reduced to a determined value;
- an operation whereby the air pressure is reduced in order to cause an increase in the oxygen concentration from an initial value to a determined value;
*and **in that***
- the operation of reducing the inert gas flow rate is performed by compensating for a loss of inert gas flow caused by the air pressure reduction operation;
- the operation of reducing the air pressure is performed by compensating for a reduction in the oxygen concentration caused by the inert gas flow rate reduction operation;

2. Method according to claim 1, ***characterized* in that** the determined inert gas flow rate value corresponds to a value determined as a function of an actual inert gas flow rate requirement at the given instant.

3. Method according to claim 1, ***characterized* in that** the determined oxygen concentration value corresponds to a value determined as a function of an actual oxygen concentration requirement at the given instant.

4. Method according to claim 1, ***characterized* in that** the determined oxygen concentration value corresponds to the initial oxygen concentration value before the operation of reducing the inert gas flow rate.

5. Inerting system (1) intended to inject inert gas into at least one fuel tank of an aircraft during the flight of the aircraft, said system comprising at least one air separation module (2) supplied at the inlet (2a) with air at a certain pressure in order to generate at the outlet (2b) an inert gas to be injected into the fuel tank comprising a certain flow rate and a certain oxygen concentration, the inerting system (1) being ***characterized* in that** it comprises a controller (6) to which are connected:
- a motorized inert gas flow rate control valve (4) positioned at the outlet (2b) of the air separation module (2);
- a motorized air pressure control valve (3) positioned at the inlet (2a) of the air separation module (2);
- an oxygen sensor (9) positioned at the outlet (2b) of the air separation module (2);
- a flow meter (5) positioned at the outlet (2b) of the air separation module (2);
*and **in that*** the controller (6) comprises a computer program comprising program code instructions that are readable and executable by said controller (6) for the transmission of:
- a decrease flow rate command to the motorized valve (4) controlling the inert gas flow rate, depending upon the inert gas flow rate determined by the flow meter (5), in order to decrease the inert gas flow rate to a determined value;
- a decrease air pressure command to the motorized valve controlling the air pressure, depending upon the oxygen concentration determined by the oxygen sensor (9), in order to increase the oxygen concentration from an initial value to a determined value;
*and **in that***
- the decrease flow command is defined in order to compensate for a loss of inert gas flow caused by the decrease in air pressure;
- the decrease air pressure command is defined in order to compensate for a reduction in the oxygen concentration caused by the reduced inert gas flow rate.

6. Inerting system (1) intended to inject inert gas into at least one fuel tank of an aircraft during the flight of the aircraft, said system comprising at least one air separation module (2) supplied at the inlet (2a) with air at a certain pressure in order to generate at the outlet (2b) an inert gas to be injected into the fuel tank comprising a certain flow rate and a certain oxygen concentration, the inerting system (1) being ***characterized* in that** it comprises a controller (6) to which are connected:
- a motorized inert gas flow rate control valve (4) positioned at the outlet (2b) of the air separation module (2);
- a motorized air pressure control valve (3) positioned at the inlet (2a) of the air separation module (2);
- an air pressure sensor positioned at the inlet (2a) of the air separation module (2);
- an air temperature sensor (11) positioned at the inlet (2a) of the air separation module (2);
- a flow meter (5) positioned at the outlet (2b) of the air separation module (2);
- an atmospheric pressure sensor;
***and in that*** the controller (6) comprises a computer program comprising program code instructions that are readable and executable by said controller (6) for the transmission of:
- a decrease flow rate command to the motorized valve (4) controlling the inert gas flow rate, depending upon the inert gas flow rate determined by the flow meter (5), in order to decrease the inert gas flow rate to a determined value;
- a decrease air pressure command to the motorized valve controlling the air pressure, depending upon the oxygen concentration determined by the oxygen sensor and a pressure regulation setpoint, in order to increase the oxygen concentration from an initial value to a determined value, the pressure regulation setpoint being obtained from conversion software integrated into the controller and designed to convert an oxygen concentration regulation setpoint, as a function of the value of the inerting gas flow rate supplied by the flow meter (5), the temperature of the inerting gas supplied by the temperature sensor (11), the ambient atmospheric pressure supplied by the atmospheric pressure sensor, and the technical and performance characteristics of the air separation module (2) integrated into the controller (6);
*and **in that***
- the decrease flow command is defined in order to compensate for a loss of inert gas flow caused by the decrease in air pressure;
- the decrease air pressure command is defined in order to compensate for a reduction in the oxygen concentration caused by the reduced inert gas flow rate.

7. Inerting system (1) according to one any claims 5 or 6, ***characterized* in that** the decrease air pressure command is defined such that the oxygen concentration reaches a determined value corresponding to the initial oxygen concentration value before the decrease in inert gas flow rate operation.
